(19) Europäisches Patentamt
European Patent Office
Office européen des brevets

(11) Numéro de publication : **0 189 701 B1**

(12) **FASCICULE DE BREVET EUROPÉEN**

(45) Date de publication du fascicule du brevet : **04.05.88**

(51) Int. Cl.[4] : **C 01 B 3/16**, B 01 J 23/84, B 01 J 23/85, B 01 J 23/88

(21) Numéro de dépôt : **85402577.2**

(22) Date de dépôt : **20.12.85**

(54) **Procédé de conversion du monoxyde de carbone par la vapeur d'eau à l'aide d'un catalyseur thiorésistant.**

(30) Priorité : **28.12.84 FR 8419974**

(43) Date de publication de la demande : **06.08.86 Bulletin 86/32**

(45) Mention de la délivrance du brevet : **04.05.88 Bulletin 88/18**

(84) Etats contractants désignés : **BE DE FR GB IT NL**

(56) Documents cités :
**GB-A- 961 860**
**US-A- 3 850 840**

(73) Titulaire : **Société Française des Produits pour Catalyse "PRO-CATALYSE"
1-4, avenue de Bois Préau
F-92500 Rueil-Malmaison (FR)**

(72) Inventeur : **Sauvion, Guy-Noel
8, rue de Béarn
F-94550 Chevilly Larue (FR)**
Inventeur : **Cailliod, Jack
31, rue Phanie Leleu
F-95150 Taverny (FR)**

(74) Mandataire : **Esson, Jean-Pierre et al
Rhône-Poulenc Interservices Service Brevets Chimie
25, quai Paul Doumer
F-92408 Courbevoie Cedex (FR)**

**EP 0 189 701 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

**Description**

La présente invention a essentiellement pour objet un procédé de conversion du monoxyde de carbone par la vapeur d'eau à l'aide d'un catalyseur résistant au soufre ou thiorésistant.

Il est déjà connu de réaliser la conversion du monoxyde de carbone par la vapeur d'eau pour préparer l'hydrogène. Cette conversion peut être effectuée en présence d'un catalyseur notamment selon la réaction suivante :

$$CO + H_2O \rightleftharpoons H_2 + CO_2$$

Dans ce but, divers catalyseurs ont été proposés, mais on a constaté que ces catalyseurs sont loin d'être très satisfaisants sur le plan de leur activité ainsi que de leur stabilité au cours du temps.

C'est ainsi que selon le FR-A-2 011 150 on a proposé des catalyseurs pour la réaction de conversion qui sont à base de molybdène et/ou de cobalt et, éventuellement de métaux alcalins, déposés sur un support d'alumine.

Egalement dans le brevets US n° 3 850 480 il est proposé un catalyseur pour la réaction de conversion du monoxyde de carbone par la vapeur d'eau. Ce catalyseur est à base de molybdène et/ou de cobalt déposé sur un support poreux tel que l'alumine ou la zircone. Toutefois, ce catalyseur contient un métal alcalin, l'interaction de ce métal alcalin avec l'autre élément catalytiquement actif permet d'obtenir une bonne activité du catalyseur.

Aussi, la présente invention a pour but de remédier à ces inconvénients en proposant un procédé de conversion du monoxyde de carbone par la vapeur d'eau à l'aide de catalyseurs thiorésistants très stables qui donnent d'excellents résultats tant sur le plan de la conversion du monoxyde de carbone que sur celui de la sélectivité de l'hydrogène produit.

A cet effet, l'invention a pour objet un procédé de conversion du monoxyde de carbone par la vapeur d'eau caractérisée en ce que l'on opère à une température comprise entre 200 et 350 °C et à une pression comprise entre environ 5 et 140 bars avec un catalyseur thiorésistant qui comprend une phase active déposée sur un support d'oxyde de cérium ou d'oxyde de zirconium, ladite phase active comprenant un métal choisi parmi le molybdène, le vanadium ou le tungstène et un promoteur d'activité constitué par du cobalt et/ou du nickel quand le support est de l'oxyde de cérium, ladite phase consistant en un métal choisi parmi le molybdène, le vanadium ou le tungstène et un promoteur d'activité constitué par du cobalt et/ou du nickel quant le support est de l'oxyde de zirconium.

Comme on le verra plus loin, la productivité en hydrogène produit par ce procédé est très supérieure à celle obtenue avec les procédés antérieurs, en raison du fait essentiel que l'on utilise, selon la présente invention, un catalyseur ayant l'oxyde de cérium ou l'oxyde de zirconium comme support.

Suivant une autre caractéristique du procédé selon l'invention, la réaction est effectuée à une vitesse spatiale comprise entre environ 100 et 10 000 heures $^{-1}$ et pour un rapport molaire eau/monoxyde de carbone compris entre 0,5 et 1,5. Le gaz traité selon le procédé de l'invention peut, par exemple, contenir en outre de l'hydrogène, en particulier il peut être issu de la vapogazéification du charbon.

Suivant un mode de réalisation préféré, la réaction est effectuée à une vitesse spatiale égale à 4 750 heures $^{-1}$ et pour un rapport molaire eau/monoxyde de carbone égale à 1, à une pression égale à 30 bars et à une température comprise entre 250 et 300 °C et plus particulièrement égale à 275 °C.

Selon l'invention, le catalyseur pour la mise en œuvre du procédé est caractérisé en ce qu'il est représentée par la formule XYZ dans laquelle X représente le molybdène, le vanadium ou le tungstène, Y représente le colbalt et/ou le nickel et Z l'oxyde de cérium ou l'oxyde de zirconium et en ce qu'il est défini par les caractéristiques suivantes :

— surface spécifique BET du support de $CeO_2$ ou de $ZrO_2$ supérieure à 10 $m^2/g$,
— volume poreux total compris entre environ 0,15 et 0,5 $cm^3/g$,
— densité de remplissage tassé comprise entre environ 0,5 et 2,5,
— rapport atomique du métal X au cérium ou au zirconium compris entre environ 1/50 et 1/4, et
— rapport atomique du métal promoteur d'activité Y (cobalt et/ou nickel) au métal X compris entre 0 et 1.

Selon un mode de réalisation préféré, la surface spécifique BET du catalyseur ci-dessus est égale à 50 $m^2/g$, son volume poreux total est compris entre 0,3 et 0,4 $cm^3/g$, la densité de remplissage tassé est comprise entre 1 et 2, le rapport atomique X/cérium ou zirconium est compris entre 1/20 et 1/7, et le rapport atomique Y/X est compris entre 0,1 et 0,5.

Le catalyseur de l'invention est préparé par les techniques courantes de l'homme de métier et en particulier par imprégnation à sec du support d'oxyde de cérium ou d'oxyde de zirconium :

— soit par les solutions d'heptamolybdate d'ammonium et de nitrate de cobalt, ou tout autre précurseur de molybdène ou de cobalt,

— soit par des solutions d'heptamolybdate d'ammonium et de nitrate de nickel, ou tout autre précurseur de molybdène ou de nickel,

— soit par des solutions d'heptamolybdate d'ammonium, de nitrate de nickel et de nitrate de cobalt, ou tout autre précurseur de molybdène, de nickel ou de cobalt.

Selon une variante du procédé, l'heptamolybdate d'ammonium peut être remplacé par le métavanadate ou le métatungstate d'ammonium ou tout autre précurseur du vanadium ou du tungstène.

Mais d'autres caractéristiques et avantages de l'invention apparaîtront mieux dans les exemples ci-après qui ne doivent pas être interprétés comme limitant la présente invention.

Exemple n° 1 - Catalyseur de l'art antérieur

Préparation du catalyseur $Co/Mo/Al_2O_3$ :

Le support utilisé est constitué d'alumine $\gamma$ présentant les caractéristiques suivantes :

— la densité de remplissage tassé est de 0,64,
— le volume poreux est de 0,57 $cm^3\ g^{-1}$
— la surface spécifique BET est de 250 $m^2\ g^{-1}$

Ce support se présente sous la forme d'extrudés de diamètre égal à 1,2 mm.

100 $cm^3$ de ce support sont imprégnés au drageoir à température ambiante par 36,5 $cm^3$ d'une solution contenant 13,5 g d'heptamolybdate d'ammonium.

La préparation obtenue est séchée à 150 °C pendant 16 heures, puis calcinée à 350 °C pendant 1 heure. Le produit est ensuite imprégné au drageoir par 25,7 $cm^3$ d'une solution contenant 9,1 g de nitrate de cobalt, puis séché à 150 °C pendant 16 heures et, enfin, calciné à 520 °C pendant 5 heures.

Le catalyseur ainsi préparé contient 9,3 % Mo et 2,1 % Co en poids par rapport au support d'alumine (Co/Mo = 0,37) et présente les caractéristiques suivantes :

— la densité de remplissage tassé est de 0,71,
— le volume poreux est de 0,45 $cm^3\ g^{-1}$
— la surface spécifique BET est de 161 $m^2\ g^{-1}$

Exemple n° 2 - Catalyseur représentatif de l'invention

Préparation du catalyseur $Co/Mo/CeO_2$ par imprégnation d'oxyde de cérium par les précurseurs heptamolybdate d'ammonium et nitrate de cobalt (0,9 % de Co et 3,6 % Mo en poids) (Co/Mo = 0,41).

Le support utilisé est constitué d'oxyde de cérium $CeO_2$ présentant les caractéristiques suivantes :

— le densité de remplissage tassé est de 1,71
— le volume poreux est de 0,17 $cm^3\ g^{-1}$
— la surface spécifique BET est de 68 $m^2\ g^{-1}$

Le support se présente sous la forme de concassés dont la taille moyenne est comprise entre 1 et 2 mm.

100 $cm^3$ de ce support sont imprégnés au drageoir par 29,0 $cm^3$ d'une solution de nitrate de cobalt contenant 7,8 g de ce sel. Ce produit est séché à 150 °C pendant 16 heures, puis calciné à 550 °C pendant 2 heures.

Le catalyseur obtenu présente les caractéristiques suivantes :

— la densité de remplissage tassé est de 1,92,
— le volume poreux est de 0,11 $cm^3\ g^{-1}$
— la surface spécifique BET est de 39 $m^2\ g^{-1}$

Exemple n° 3 - Catalyseur représentatif de l'invention

Préparation du catalyseur $Ni/Mo/CeO_2$ par imprégnations successives d'oxyde de cérium par les précurseurs heptamolybdate d'ammonium et nitrate de nickel (1,1 % de Ni et 3,6 % Mo en poids) (Ni/Mo = 0,50) :

Le support utilisé est identique à celui décrit dans l'exemple n° 2.

100 $cm^3$ de ce support sont imprégnés au drageoir par 20 $cm^3$ d'une solution d'heptamolybdate d'ammonium contenant 11,6 g de ce sel. La préparation obtenue est séchée à 150 °C pendant 16 heures, puis calcinée à 550 °C pendant 0,5 heure.

Le produit ainsi préparé est imprégné au drageoir par 23,9 $cm^3$ d'une solution de nitrate de nickel contenant 9,5 g de ce sel. Ce produit est séché à 150 °C pendant 16 heures, puis calciné à 550 °C pendant 2 heures.

Le catalyseur obtenu présente les caractéristiques suivantes :

— la densité de remplissage tassé est de 1,95
— le volume poreux est de 0,11 $cm^3\ g^{-1}$
— la surface spécifique BET est de 37 $m^2\ g^{-1}$

Exemple n° 4 - Catalyseur représentatif de l'invention

Préparation du catalyseur $Co/Mo/ZrO_2$ par imprégnation d'oxyde de zirconium par les précurseurs heptamolybdate d'ammonium et nitrate de cobalt (1,5 % de Co et 8,3 % Mo en poids) :

Le support utilisé est constitué d'oxyde de zirconium $ZrO_2$ présentant les caractéristiques suivantes :

— la densité de remplissage tassé est de 1,34

— le volume poreux est de 0,17 $cm^3$ $g^{-1}$
— la surface spécifique BET est de 80 $m^2$ $g^{-1}$

Le support se présente sous la forme de concassés dont la taille moyenne est comprise entre 2 et 3 mm.

100 $cm^3$ de ce support sont imprégnés en deux fois au drageoir par 45,6 $cm^3$ d'une solution d'heptamolybdate d'ammonium contenant 20,6 g de ce sel. La préparation obtenue est séchée à 150 °C pendant 16 heures, puis calcinée à 550 °C pendant 0,5 heure.

Le produit ainsi préparé est imprégné au drageoir par 22,8 $cm^3$ d'une solution de nitrate de cobalt contenant 10,2 g de ce sel. Ce produit est séché à 150 °C pendant 16 heures, puis calciné à 550 °C pendant 2 heures.

Le catalyseur obtenu présente les caractéristiques suivantes :
— la densité de remplissage tassé est de 1,54
— le volume poreux est de 0,15 $cm^3$ $g^{-1}$
— la surface spécifique BET est de 52 $m^2$ $g^{-1}$

Exemple n° 5 - Catalyseur représentatif de l'invention

Préparation du catalyseur $Ni/Mo/ZrO_2$ par imprégnation successives d'oxyde de zirconium par les précurseurs heptamolybdate d'ammonium et nitrate de nickel (1,7 % de Ni et 8,3 % Mo en poids).

Le support utilisé est identique à celui décrit dans l'exemple n° 4.

100 $cm^3$ de ce support sont imprégnés en deux fois au drageoir par 45,6 $cm^3$ d'une solution d'heptamolybdate d'ammonium contenant 20,6 g de ce sel. La préparation obtenue est séchée à 150 °C pendant 16 heures, puis calcinée à 550 °C pendant 0,5 heure.

Le produit ainsi préparé est imprégné au drageoir par 22,8 $cm^3$ d'une solution de nitrate de nickel contenant 12,6 g de ce sel. Ce produit est séché à 150 °C pendant 16 heures, puis calciné à 550 °C pendant 2 heures.

Le catalyseur obtenu présente les caractéristiques suivantes :
— la densité de remplissage tassé est de 1,57
— le volume poreux est de 0,14 $cm^3$ $g^{-1}$
— la surface spécifique BET est de 50 $m^2$ $g^{-1}$

Exemple n° 6

Test catalytique :

Ce test catalytique, qui avait pour but de comparer les performances de tous les catalyseurs ci-dessus en termes d'activité et de sélectivité dans la préparation de l'hydrogène, a consisté à mettre en contact tous ces catalyseurs avec un mélange de réactifs comprenant 37,5 % en volume de CO (monoxyde de carbone), 37,0 % en volume de $H_2$, 25 % en volume de $H_2O$ et 0,5 % en volume de $H_2S$.

La réaction a été effectuée à une vitesse spatiale de 4750$h^{-1}$, sous une pression de 30 bars et une température comprise entre 250 et 350 °C, après que les catalyseurs eurent subi un traitement de présulfuration à 350 °C pendant 6 heures sous un courant de 10 litres/h d'un mélange de 1,3 % de $H_2S$ dans l'hydrogène.

Après séparation de l'eau par un condenseur, on a analysé les gaz de sortie par chromatographie en phase gazeuse, ce qui a permis de doser CO, $CO_2$, $CH_4$, $C_2H_6$ et $C_3H_8$.

Cette analyse a permis de calculer d'une part le taux de conversion $t_{CO}$ du monoxyde de carbone (%), défini par le rapport :

$$T_{CO} = \frac{\text{moles de CO consommées}}{\text{moles de CO introduites}} \times 100$$

et d'autre part, la sélectivité $S_X$ en $CO_2$ et $C_nH_{2n+2}$ (%) définie par le rapport :

$$S_X = \frac{\text{moles de X formées}}{\text{moles de CO consommées}} \times 100$$

Les tableaux ci-dessous illustrent les résultats obtenus sur tous les catalyseurs décrits précédemment.

(Voir Tableaux page 5)

Catalyseur de l'art antérieur
Co/Mo/A1$_2$O$_3$

| Température °C | $t_{CO}$ % | $S_{CO_2}$ % | $S_{C_nH_{2n+2}}$ |
|---|---|---|---|
| 250 | 52,5 | 99,8 | 0,2 |
| 275 | 55,5 | 99 | 1,0 |
| 300 | 55,9 | 98,1 | 1,9 |
| 325 | 56,1 | 97,9 | 2,1 |
| 350 | 58,3 | 90,8 | 9,2 |

Catalyseur de l'invention
Co/Mo/CeO$_2$

| Température °C | $t_{CO}$ % | $S_{CO_2}$ % | $S_{C_nH_{2n+2}}$ |
|---|---|---|---|
| 250 | 64,3 | 100 | 0 |
| 275 | 67,6 | 100 | 0 |
| 300 | 69,0 | 99,8 | 0,2 |
| 325 | 70,3 | 99,2 | 0,8 |
| 350 | 74,0 | 97,0 | 3,0 |

Catalyseur de l'invention
Ni/Mo/CeO$_2$

| Température °C | $t_{CO}$ % | $S_{CO_2}$ % | $S_{C_nH_{2n+2}}$ |
|---|---|---|---|
| 250 | 65,7 | 100 | 0 |
| 275 | 69,1 | 100 | 0 |
| 300 | 69,2 | 99,7 | 0,3 |
| 325 | 70,4 | 99,1 | 0,9 |
| 350 | 73,9 | 96,7 | 3,3 |

Catalyseur de l'invention
Co/Mo/ZrO$_2$

| Température °C | $t_{CO}$ % | $S_{CO_2}$ % | $S_{C_nH_{2n+2}}$ |
|---|---|---|---|
| 250 | 61,5 | 100 | 0 |
| 275 | 68,5 | 99,9 | 0,1 |
| 300 | 70,2 | 99,7 | 0,3 |

Catalyseur de l'invention
Mo/Ni/ZrO$_2$

| Température °C | $t_{CO}$ % | $S_{CO_2}$ % | $S_{C_nH_{2n+2}}$ |
|---|---|---|---|
| 250 | 62,5 | 100 | 0 |
| 275 | 68,9 | 100 | 0 |
| 300 | 72,6 | 99,6 | 0,4 |

L'examen des résultats reportés dans les tableaux met en évidence les performances particulièrement intéressantes obtenues par les catalyseurs représentatifs de l'invention décrits dans les exemples 2 à 5.

D'une manière générale, les résultats données dans le tableau mettent clairement en évidence la supériorité des catalyseurs selon l'invention par rapport aux catalyseurs de l'art antérieur pour ce qui est du taux de conversion du monoxyde de carbone.

On a donc réalisé suivant l'invention un procédé de conversion du monoxyde de carbone par la

vapeur d'eau qui permet de récupérer des quantités importantes d'hydrogène en utilisant un catalyseur à base d'oxyde de cérium ou d'oxyde de zirconium particulièrement stable et résistant efficacement aux composés soufrés tels que $H_2S$, COS, $CS_2$, $CH_3S$, etc... dont la teneur peut dépasser 4 % molaire.

## Revendications

1. Procédé de conversion du monoxyde de carbone par la vapeur d'eau caractérisé en ce que l'on opère à une température comprise entre environ 200 et 350 °C et à une pression comprise entre environ 5 et 140 bars, avec un catalyseur thiorésistant comprenant une phase activité comprenant un métal choisi parmi le molybdène, le vanadium ou le tunsgtène et un promoteur d'activité constitué par du cobalt et/ou du nickel, ladite phase active étant déposées sur un support de cérium.

2. Procédé de conversion du monoxyde de carbone par la vapeur d'eau caractérisée en ce que l'on opère à une température comprise entre environ 200 et 350 °C et à une pression comprise entre environ 5 et 140 bars, avec un catalyseur thiorésistant consistant en une phase active comprenant un métal choisi parmi le molybdène, le vanadium ou le tungstène et un promoteur d'activité constitué par du cobalt et/ou du nickel, ladite phase active étant déposée sur un support constitué par de l'oxyde de zirconium.

3. Procédé selon la revendication 1 ou 2, caractérisé en ce que la réaction est effectuée à une vitesse spatiale comprise entre environ 100 et 10 000 heures$^{-1}$ et pour un rapport molaire eau/monoxyde de carbone compris entre 0,5 et 1,5.

4. Procédé selon la revendication 1, 2 ou 3, caractérisé en ce que la réaction est effectuée à une vitesse spatiale égale à 4 750 heures$^{-1}$ et pour un rapport molaire hydrogène/monoxyde de carbone égal à 1, à une pression égale à 30 bars et à une température comprise entre 250 et 300 °C.

5. Procédé selon l'une des revendications 1 à 4, caractérisé en ce que le catalyseur répond à la formule XYZ dans laquelle X représente le molybdène, le vanadium ou le tungstène, Y représente le cobalt et/ou le nickel et Z l'oxyde de cérium ou de zirconium et en ce que ledit catalyseur est défini par la formation suivante :

surface spécifique BET du support de $CeO_2$ ou $ZrO_2$ supérieure à 10 m$^2$/g ;
volume poreux total compris entre environ 0,15 et 0,5 cm$^3$/g ;
densité de remplissage tassé comprise entre environ 0,5 et 2,5 ;
rapport atomique du métal X précité au cérium ou au zirconium compris entre environ 1/50 et 1/4, et
rapport atomique du métal promoteur d'activité Y au métal X compris entre 0,1 et 1.

6. Procédé selon la revendication 5, caractérisé en ce que la surface spécifique BET du catalyseur est égale à 50 m$^2$/g, le volume poreux total est compris entre 0,3 et 0,4 cm$^3$/g, la densité de remplissage tassé est comprise entre 1 et 2, le rapport atomique X/cérium ou zirconium est compris entre 1/20 et 1/7, et le rapport atomique Y/Z est compris entre 0,1 et 0,5.

## Claims

1. Process for the conversion of carbon monoxide by steam, characterised in that the reaction is carried out at a temperature of between approximately 200 and 350 °C and at a pressure of between approximately 5 and 140 bars, with a thioresistant catalyst comprising an active phase comprising a metal chosen from amongst molybdenum, vanadium or tungsten and an activity promoter consisting of cobalt and/or nickel, the said active phase being deposited on a cerium oxide support.

2. Process for the conversion of carbon monoxide by steam, characterised in that the reaction is carried out at a temperature of between approximately 200 and 350 °C and at a pressure of between approximately 5 and 140 bars, with a thioresistant catalyst consisting of an active phase comprising a metal chosen from amongst molybdenum, vanadium or tungsten and an activity promoter consisting of cobalt and/or nickel, the said active phase being deposited on a support consisting of zirconium oxide.

3. Process according to Claim 1 or 2, characterised in that the reaction is carried out at a space velocity of between approximately 100 and 10 000 hours$^{-1}$ and at a steam : carbon monoxide molar ratio of between 0,5 and 1,5.

4. Process according to Claim 1, 2 or 3, characterised in that the reaction is carried out at a space velocity equal to 4 750 hours$^{-1}$ and at a hydrogen : carbon monoxide molar ratio equal to 1, at a pressure equal to 30 bars and at a temperature of between 250 and 300 °C.

5. Process according to one of Claims 1 to 4, characterised in that the catalyst corresponds to the formula XYZ in which X represents molybdenum, vanadium or tungsten, Y represents cobalt and/or nickel and Z cerium oxide or zirconium oxide and in that the said catalyst is defined by the following formulation :

BET specific surface area of the $CeO_2$ or $ZrO_2$ support larger than 10 m$^2$/g ;
total pore volume of between approximately 0,15 and 0,5 cm$^3$/g ;
packed density of between approximately 0,5 and 2,5 ;
atom ratio of the abovementioned metal X to cerium or to zirconium is between approximately 1/50 and 1/4 ; and

atom ratio of the activity-promoting metal Y to metal X is between 0,1 and 1.

6. Process according to Claim 5, characterised in that the BET specific surface area of the catalyst is equal to 50 $m^2/g$, the total pore volume is between 0,3 and 0,4 $cm^3/g$, the packed density is between 1 and 2, the atom ratio X : cerium or zirconium is between 1/20 and 1/7, and the atom ratio Y/X is between 0,1 and 0,5.

**Patentansprüche**

1. Verfahren zur Umwandlung von Kohlenmonoxid mit Hilfe von Wasserdampf, dadurch gekennzeichnet, daß man bei einer Temperatur zwischen ungefähr 200 und 350 °C und bei einem Druck zwischen ungefähr 5 und 140 bar arbeitet, mit einem thioresistenten Katalysator mit einer aktiven Phase, die ein Metall, ausgewählt aus Molybdän, Vanadium oder Wolfram, und einen Aktivitätsbeschleuniger bestehend aus Kobalt und/oder Nickel enthält, wobei diese aktive Phase auf einem Träger aus Ceroxid angeordnet ist.

2. Verfahren zur Umwandlung von Kohlenmonoxid mit Hilfe von Wasserdampf, dadurch gekennzeichnet, daß man bei einer Temperatur zwischen ungefähr 200 und 350 °C und einem Druck zwischen ungefähr 5 und 140 bar arbeitet, mit einem thioresistenten Katalysator bestehend aus einer aktiven Phase, enthaltend ein Metall ausgewählt aus Molybdän, Vanadium oder Wolfram und einen Aktivitätsbeschleuniger bestehend aus Kobalt und/oder Nickel, wobei diese aktive Phase auf einem Träger bestehend aus Zirkonoxid angeordnet ist.

3. Verfahren nach Anspruch 1 oder 2, dadurch gekennzeichnet, daß die Reaktion bei iner Raumgeschwindigkeit zwischen ungefähr 100 und 10 000 Stunden$^{-1}$ und mit einem molaren Verhätnis Wasser/Kohlenmonoxid zwischen 0,5 und 1,5 durchgeführt wird.

4. Verfahren nach Anspruch 1, 2 oder 3, dadurch gekennzeichnet, daß die Reaktion bei einer Raumgeschwindigkeit von 4 4750 Stunde$^{-1}$ und mit einem molaren Verhältnis Wasserstoff/Kohlenmonoxid von 1 bei einem Druck von 30 bar und einer Temperatur zwischen 250 und 300 °C durchgeführt wird.

5. Verfahren nach einem der Ansprüche 1 bis 4, dadurch gekennzeichnet, daß der Katalysator der Formel XYZ entspricht, in der X Molybdän, Vanadium oder Wolfram darstellt, Y Kobalt und/oder Nickel darstellt und Z Cer- oder Zirkoniumoxid darstellt und daß dieser Katalysator entsprechend der nachfolgenden Formel definiert ist :

spezifische Oberfläche BET des $CeO_2$ oder $ZrO_2$ Trägers größer als 10 $m^2/g$ ;

gesamtes Porenvolumen zwischen ungefähr 0,15 und 0,5 $cm^3/g$ ;

Dichte der verdichteten Füllung zwischen ungefähr 0,5 und 2,5 ;

Atomverhältnis des vorgenannten Metalls X zur Cer oder zu Zirkonium zwischen ungefähr 1/50 und 1/4, und

Atomverhältnis des Metalls zur Aktivitätsbeschleuning Y zum Metall X zwischen 0,1 und 1.

6. Verfahren nach Anspruch 5, dadurch gekennzeichnet, daß die spezifische Oberfläche BET des Katalysators gleich 50 $m^2/g$ ist, das gesamte Porenvolumen zwischen 0,3 und 0,4 $cm^3/g$ liegt, die Dichte der verdichteten Füllung zwischen 1 und 2 beträgt, das Atomverhältnis X zu Cer oder Zirkonium zwischen 1/20 und 1/7 beträgt und das Atomverhältnis Y/X zwischen 0,1 und 0,5 liegt.